# EUROPEAN PATENT APPLICATION

(11) **EP 1 427 205 A1**
(43) Date of publication of application: **09.06.2004**
(21) Application number: 02765537.2
(22) Date of filing: 13.09.2002
(51) Int. Cl.: H04N 5/91, H04N 7/15

(54) **NETWORK INFORMATION PROCESSING SYSTEM AND INFORMATION PROCESSING METHOD**

(30) Priority: 14.09.2001 JP 2001280697
(71) Applicant: Sony Corporation, Tokyo 141-0001 (JP)
(72) Inventor: MIYAKE, Toru, c/o Sony Corporation, Tokyo 141-0001 (JP); TABUCHI, Satoshi, c/o Sony Corporation, Tokyo 141-0001 (JP); SUZUKI, Hiroyuki, c/o Sony Corporation, Tokyo 141-0001 (JP)
(74) Representative: Turner, James Arthur
(86) International application number: PCT/JP2002/009397
(87) International publication number: WO 2003/026288

(57) **Abstract**

The present invention relates to a network information processing system and the like that are well applicable to a network electronic conference system and the like. When multiple pieces of information transferred from multiple information input devices is input, it is easy to create contents efficiently without making any mistakes, and to edit an image or audio as well as a still picture, text and the like without their display timing staggering. For example, multiple pieces of information including at least moving picture or audio information that is sent from an information processor and a moving picture/audio input apparatus in a network information processing system and still picture information in synchronized with the moving picture or audio information are recorded with them being met a predetermined time axis and according to their time series, and viewable or audible contents are created on the basis of these pieces of information. When editing, the multiple pieces of information are visibly displayed with a display band along each time axis using a thumbnail and the like and according to their time series.

## Description

### TECHNICAL FIELD

The present invention relates to a network information processing system and an information processing method that are well applicable to a network electronic conference system, a network education system, a network game system, etc. More specifically, it relates to a network information processing system and an information processing method in which, multiple pieces of information including at least moving picture or audio information that is sent from an information processor and a moving picture/audio input apparatus in a network information processing system and still picture information in synchronized with the moving picture or audio information are recorded with them being met a predetermined time axis and according to their time series, and viewable or audible contents are created on the basis of these pieces of information, thereby enabling contents to be efficiently created.

### BACKGROUND ART

When conventional information processing system has multiple information input devices, information from each of the information-input devices is usually processed by handwork to create reproduction contents after the information has been classified and recorded. For example, such information processing method is present that when multiple pieces of information such as still picture and text as well as moving picture or audio information are present, the still picture and text information and moving picture or audio information are separately handled and then, the still picture and text information is inserted into a suitable position in the moving picture or audio information to create the contents.

As described above, according to the conventional information processing system, if there are multiple information input devices, information from each of the information input devices is processed by handwork to create reproduction contents after the information has been classified and recorded, and thus it is necessary for an operator to process the information with hi or her taking into consideration display timings of multiple pieces of the information and their display times, which reduces working efficiency.

Further, although there has been conventional software for editing only the audio and image, there is no software for editing contents such as still picture and text displayed in synchronized with image or audio based on their time axes with them being visually arranged according to their time series. Thus, it is impossible to edit image or audio and still picture and text without their display timings staggering.

Additionally, if multiple information-distributing systems are in a conference room, different devices are used according to the contents of the conference. Conventionally, recording when materials are displayed, which of the materials is displayed and what kinds of the devices are used to display it has been performed and then, authoring process to the contents has been performed by handwork using a homepage authoring software, thereby causing the operator to apt to make mistakes and working efficiency thereof to be reduced.

### DISCLOSURE OF THE INVENTION

It is an object of the present invention to enable contents to be efficiently created without any error. It is another object of the present invention to edit image or audio as well as still picture and text easily without their display timings staggering.

A network information processing system related to the present invention comprises at least one information processor having an input operation function and processing arbitrary information, display device for displaying an image based on at least information transferred from said information processor, information processing assisting apparatus for assisting network information processing including said display device based on input operation instruction from the information processor, communication means for connecting said information processing assisting apparatus and said information processor, a moving picture/audio input apparatus for inputting at least an image or audio except for the information transferred from the information processor, and information-creating device for recording multiple pieces of information respectively transferred from the information processor and the moving picture/audio input apparatus with the multiple pieces of information being met a predetermined time axis and for creating viewable and audible contents on the basis of these multiple pieces of information.

An information processing system method to the present invention comprises the steps of recording multiple pieces of information respectively transferred from multiple information processors with the multiple pieces of information being met a predetermined time axis, and creating viewable and audible contents on the basis of these multiple pieces of information thus recorded at the recording step.

For example, the creating step includes a processing step for editing said created contents to create new contents. In the processing step, the contents are edited using editing screen, and the editing screen displays at least the multiple pieces of information with display bands along each time axis and current time line for indicating current time, which extends perpendicular to the time axis and travels along the time axis.

In the creating step, one template corresponding to the multiple pieces of information is selected from previously registered multiple templates to create the contents corresponding to the one template.

According to the present invention, multiple pieces of information transferred from multiple information input devices, for example, multiple pieces of information including at least moving picture or audio information and still picture information in synchronized with them are recorded with these pieces of information being met a predetermined time axis. Then, contents are created on the basis of these pieces of information thus recorded. Thus, according to the invention, the contents are created on the basis of these pieces of information thus recorded with them being met a predetermined time axis and thus, editing or the like may be performed on these pieces of information without being oblivious of time for displaying them in a synchronized way, thereby enabling the contents to be efficiently created.

Further, according to the invention, the created contents are edited to create new contents. For example, the contents are edited using an editing screen. The editing screen displays at least the multiple pieces of information with display bands along each time axis and current time line for indicating current time, which extends perpendicular to the time axis and travels along the time axis. For example, when the multiple pieces of information includes at least moving picture or audio information as well as still picture information in synchronized with them, the display band for displaying the still picture information displays its display state in a sprite way that a portion of the display band corresponding to a period from a display start of each still picture to its display completion is different from a remaining portion thereof and has thumbnail of the sill picture corresponding to each of the portions of the display period.

Thus, since the editing screen displays the multiple pieces of information visibly with the display bands along each time axis using the thumbnail and the like and according to their time series, it is easily to grasp consecutive relationship between the multiple pieces of information, thereby enabling editing such as a cut to be facilitated.

Further, in the invention, a template corresponding to the multiple pieces of information is selected from the previously registered multiple templates, and then the contents are created corresponding to this one template. For example, when the multiple pieces of information includes at least moving picture or audio information as well as still picture information in synchronized with them, a template is selected corresponding to a number of series of the still picture information.

Since a template corresponding to the multiple pieces of information is selected and the contents are created using the template, it may create less erroneous contents compared with the contents that is authored with a conventional homepage authoring software by handwork, thereby improving working efficiency thereof.

### BRIEF DESCRIPTION OF THE DRAWINGS

FIG. 1 is an illustration for showing a configuration of a network electronic conferencing system;
FIG. 2 is an illustration for showing a configuration of a communicator, which functions as an information processing assisting apparatus;
FIG. 3 is an illustration for showing a configuration of a creator, which functions as an information creating apparatus;
FIG. 4 is an illustration for showing a display screen of a client PC, which functions as an information processor;
FIG. 5 is an illustration for showing a condition where a creator menu is displayed;
FIG. 6 is an illustration for showing a content manager screen;
FIG. 7 is an illustration for showing another example of the network electronic conferencing system;
FIG. 8 is an illustration for showing a further example of the network electronic conferencing system;
FIG. 9 is a flowchart for showing system operations;
FIG. 10 is an illustration for showing a screen for confirming that a content has been saved;
FIG. 11 is an illustration for showing a content reproduction screen;
FIGS. 12A and 12B are flowcharts of recording operations of the creator;
FIG. 13 is an illustration for showing a directory structure of data;
FIG. 14 is an illustration for showing an example of a reproduction management list;
FIGS. 15A and 15B are flowcharts of contents-creating operations by the creator;
FIG. 16 is an illustration for showing a template in a case where one projector is used;
FIG. 17 is an illustration for showing a template in a case where two projectors are used;
FIG. 18 is an illustration for showing a template in a case where three projectors are used;
FIGS. 19A and 19B are flowcharts of contents-reproducing operations by the creator;
FIG. 20 is an illustration for showing contents-editing screen;
FIG. 21 is a flowchart of editing for cutting contents all together;
FIG. 22 is an illustration for showing editing for cutting contents all together;
FIG. 23 is a flowchart of editing contents for inserting data thereinto;
FIG. 24 is an illustration for showing editing contents for inserting data thereinto (before insert);
FIG. 25 is an illustration for showing editing contents for inserting data thereinto (after insert);
FIG. 26 is a flowchart of selecting a template; and
FIG. 27 is an illustration for showing automatic alteration of template after editing.

### BEST MODE FOR CARRYING OUT THE INVENTION

The following will describe in detail a network electronic conference system related to an embodiment of the present invention.

For example, in a case of the network electronic conferencing system, electronically created presentation materials are transferred to a projector and the like, which is a display device, and a conference is advanced with these materials being zoomed up. Thus, the entire system is composed by providing a computer (a personal computer) as information processor that manages the presentation materials, information processing assisting apparatus (having a personal computer configuration) used for transferring the presentation materials to the display device and the like.

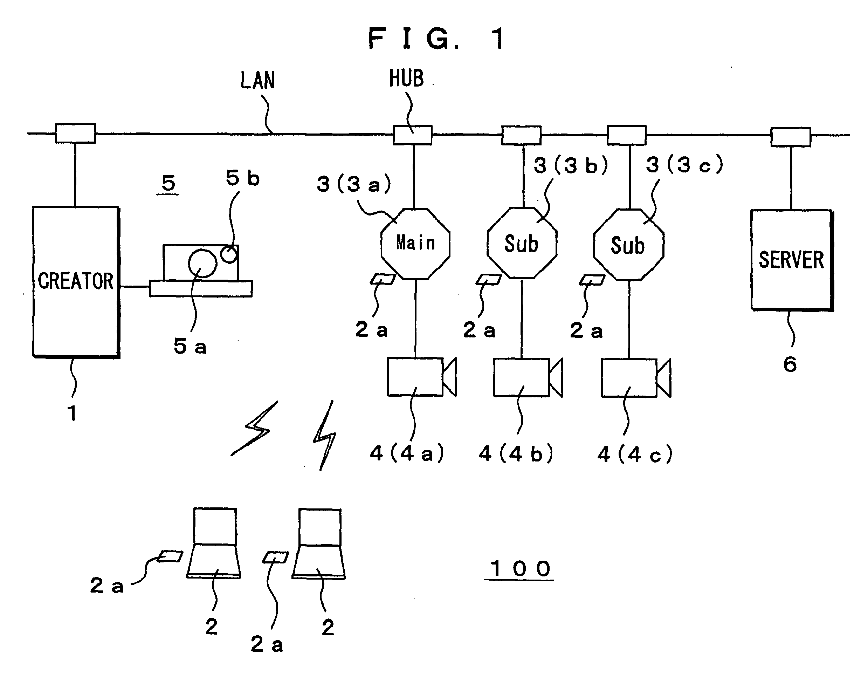

FIG. 1 shows a configuration example of this network electronic conferencing system 100. This system 100 comprises an information processor (hereinafter referred to as client PC) 2 for saving and managing the presentation materials (file data) as described above and a display device (hereinafter referred to as projector) 4 constituted of a projector etc. for projecting and displaying presentation materials as well as an information processor (hereinafter referred to as communicator) 3 constituted of a personal computer for assisting a client PC2 and the projector 4 in data transfer, data processing, etc. between them.

The communicator 3 is controlled by the client PC2, so that through this communicator 3, an image displayed on the video projector 4 is controlled. Therefore, the communicator 3 and the projector 4 are connected to each other through RGB cables etc. therefore, the communicator 3 and the projector 4 are connected to each other through RGB cables etc.

The client PC2 and the communicator 3 are coupled to each other by communication means. Although the communication means may be of wireless or wire system, in the present embodiment it is employed as wireless communication means.

Therefore, the client PC2 and the communicator 3 are each equipped with a wireless LAN card (network interface card) 2a as the comnunication means connecting them to each other. In the case of wireless communication also, in place of the wireless LAN card, an access point (not shown) may be used through which they communicate with each other, in configuration.

To this network electronic conferencing system 100, there is further coupled via an LAN an information creating apparatus (hereinafter referred to as creator) 1 for recording a condition of a conference room as an image and audio and recording the presentation materials used in the conference to create proceedings (conference contents) of the conference. To the creator 1, a video camera 5a acting as a moving picture input apparatus and a microphone 5b acting as an audio input apparatus are connected. This moving picture/audio input apparatus 5 is directly connected to the creator 1 in this example and configured so that its operation mode can be controlled in accordance with an instruction from the client PC2.

The main communicator 3a and the creator 1 each hold a global IP address of a same segment so that these creator 1 and communicator 3 can advance a conference between remote-located conference rooms through interactive communication therebetween or a network such as the Internet. Even if the global IP addresses are of different segments, they are permissible. Note that sub-communicators 3b, 3c hold private IP addresses.

Further, to the electronic conferencing system, a server 6 serving as an information-saving apparatus is connected via the LAN so that the server 6 can save and manage the conference contents etc. collectively.

The client PC 2 has electronic conferencing application software installed therein. Up to 16 client PCs 2 can be used in one conferencing system. When a plurality of the client PCs is used, they each have a unique private IP address set thereto.

In a case where the plurality of client PCs 2 is used, a common password is set to build up a conference system having secrecy by creating an environment closed in the relevant conference room such that no external unspecified third party can attend the conference or view conference contents.

This password can be set arbitrarily by a first conference attendee, so that the remaining conference attendees can enter this password to thereby attend this conferencing system.

Any one of the conference attendees transfers presentation materials from the client PC2 to the communicator 3 via the wireless LAN card 2a to display them on the projector 4, thereby acquiring a right for presentation. Only by operating functions keys on the client PC 2, he or she can give up the presentation right to turn it over to any other conference attendee, so that the conference all of the attendees reserve a qualification as a presenter.

In configuration, one of the conference attendees can use the client PC 2 to control operation modes for recording, reproduction, etc. on the creator 1. That is, the one of the attendees acquires a right to create materials for conference proceedings.

Further, this network electronic conference system 100 includes an information processing apparatus for editing the contents created by the information creating apparatus that creates the conference proceedings (conference contents). This information processing apparatus is composed of the client PC 2 and the creator 1.

The following will describe components of the network electronic conferencing system 100.

Each conference room has one projector 4 installed in it, so that in the simplest basic configuration of the electronic conferencing system is constituted of one communicator 3. However, in some cases, a plurality of the projectors 4 should be used to advance the conference so that it may be administered more efficiently. This is because there may occur such a case often that different presentation materials are displayed on a plurality of projectors simultaneously and used in explanation.

In such a case, basically the communicators 3 are arranged in accordance with the number of the projectors 4 installed. FIG. 1 gives a configuration example in a case where the three projectors 4 are used. In such a case of using a plurality of the communicators 3, one of them is used as a main communicator 3a and the remaining two are used as sub-communicators 3b and 3c.

In this case, control system is such that presentation materials etc. sent from the client PC 2 may be managed by the main communicator 3a and displayed on projectors 4b and 4c through the sub-ccmmunicators 3b and 3c respectively. Therefore, the sub-communicators 3b and 3c each own a private IP address. It also is possible to control the plurality of communicators 3a, 3b, and 3c independently of each other.

The main communicator 3a has a function also to send via the LAN to the creator 1 presentation materials themselves transferred from the client PC 2 and information about a condition when a page for these presentation materials has been turned over (time when the page has been turned over, information of the page, etc.) or receive information recorded in the creator 1 in accordance with an instruction from the client PC 2 and distribute it to the client PC 2.

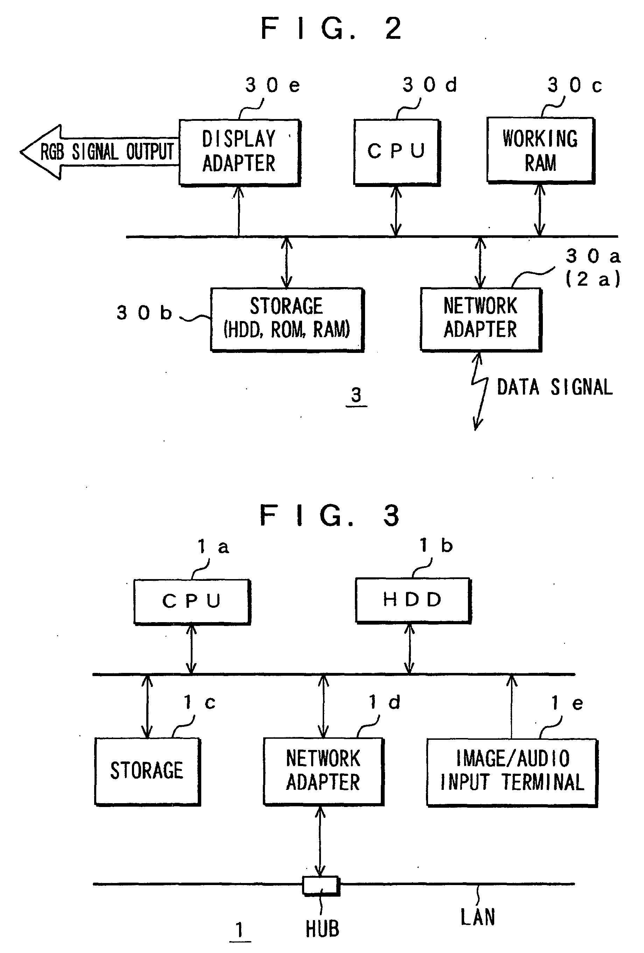

FIG. 2 shows a configuration of the communicator 3. As shown in FIG. 2, the communicator 3 is comprised of a network adapter 30a for transmitting presentation materials to and receiving them from the client PC 2, a storage 30b in which processing programs are stored, a working memory (working RAM) 30c, a CPU30d, and a display adapter 30e for outputting presentation materials using RGB signals.

As the network adapter 30a, the above-mentioned wireless LAN card 2a is used in this example. The storage 30b stores basic software (electronic conferencing application software) that activates the communicator 3 and processing programs for processing presentation materials.

The working RAM30c is used to accumulate received presentation materials temporarily and process them. The presentation materials are converted into the R, G, and B signals under the control of the CPU30d and supplied to the display adapter 30e. The projector 4 is connected to the communicator 3 through RGB cables.

FIG. 3 shows a configuration of the creator 1. This creator 1 comprises a CPU1a for processing programs, a working memory (hard disk HDD in this example) 1b for processing transmitted/received information (information such as moving pictures and still pictures), a storage 1c for storing information such as moving picture/audio etc. including presentation materials and a control program for processing them, and a network adapter 1d for connecting the communicator 3. The creator 1 further comprises an image/audio input terminal (I/O interface) 1e for receiving or controlling moving picture/audio information from the moving picture/audio input apparatus 5.

This creator 1 records information about presentation materials displayed at the communicator 3 as described above and also records information such as that (IP addresses, face photos, etc.) of attendees who have attended an electronic conference transferred from the communicator 3 as well as moving picture/audio information. It also has a function to automatically create conference contents, which may be called conference proceedings, when the recording is finished. How to create conference contents automatically will be described later.

If a plurality of the client PCs is present as described above, one of these client PCs 2 conducts control on the creator 1 and the moving picture/audio input apparatus 5. That is, they are controlled by the client PC 2 (hereinafter referred to as client PC for a clerical-worker) acting as a clerical worker.

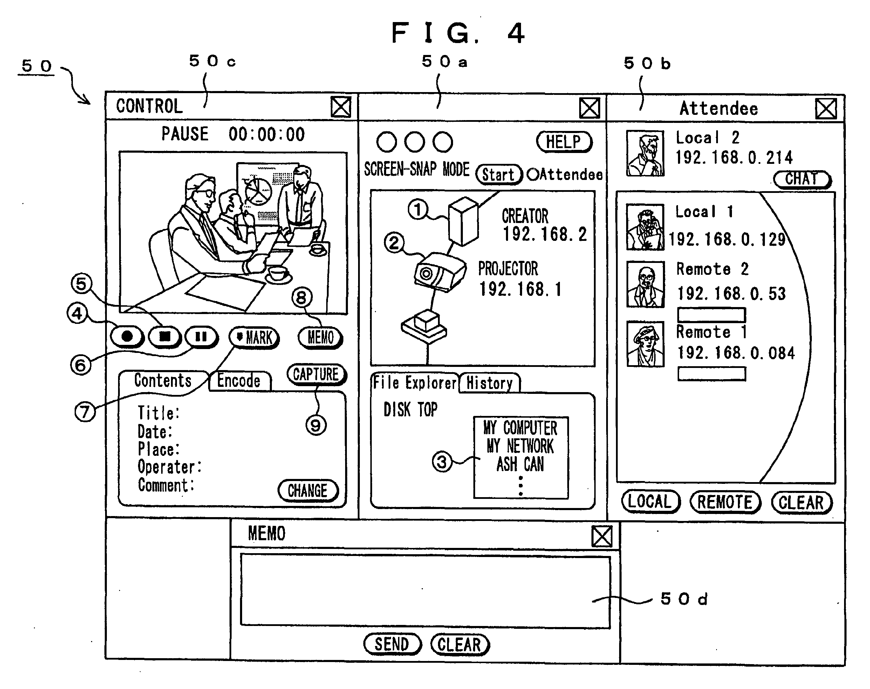

For any client PC 2 to become the clerical-worker client PC, it is necessary for it only to open a control (CONTROL) screen, which is used as an operating screen for the creator 1. FIG. 4 is an illustration for showing one example of a GUI screen 50, which is displayed on a display screen of the clerical client PC.

This display screen is roughly composed of three display screens split in a horizontal direction in such a configuration that at a middle on this display screen a basic screen 50a for the client PC side is displayed, on its right side an attendee screen 50b is displayed which displays information about attendees of the conference, and on the left side of the basic screen 50a a control screen 50c is displayed which controls the creator 1. Further, at the bottom on the screen, a horizontally long memo screen 50d is displayed.

At the top on the basic screen, icons of devices connected to the electronic conferencing system are displayed. In the figure, an icon ① of the creator 1, an icon ② of the communicator 3, etc. are displayed. Although not given a reference symbol in the figure, an icon of the moving picture/audio input apparatus 5 is also displayed.

A lower side of the basic screen 50a is used as a list field for files, in which file names ③ accumulated in the client PC 2 serving as a presenter are displayed.

In the attendee screen 50b, there are displayed face photos of attendees, private IP addresses of the client PCs 2 that the attendee owns, etc.

In the control screen 50c, its top is used as an image display portion, where images picked up by the video camera 5a are displayed as a moving picture. Its middle portion is used as a band-like display area, in which a plurality of soft keys including the function keys is operated; and its bottom is used as an input portion for inputting a title etc. In this soft key operation portion, there are displayed a REC key ④, a STOP key ⑤, and a PAUSE key ⑥ as well as a MARK key ⑦ for marking important locations during recording, a MEMO key ⑧ for opening the memo screen, and a CAPTURE key ⑨ for saving still picture information (presentation materials) displayed on the projector 4 and the like.

When the client PC 2 has logged on the communicator 3, only the basic screen 50a is displayed on its display screen. By dragging a file in the file list ③ to the icon of the communicator 3 and dropping it there, data of this file (presentation material) is transferred to the communicator 3 and displayed on the projector 4 so that it can be presented. However, this holds true with a case where these operations are performed by the client PC 2 that has acquired a presenter's qualification.

When an ATTENDEE key on the basic screen 50a is pressed, the attendee screen 50b is displayed on its right side as shown in FIG. 4.

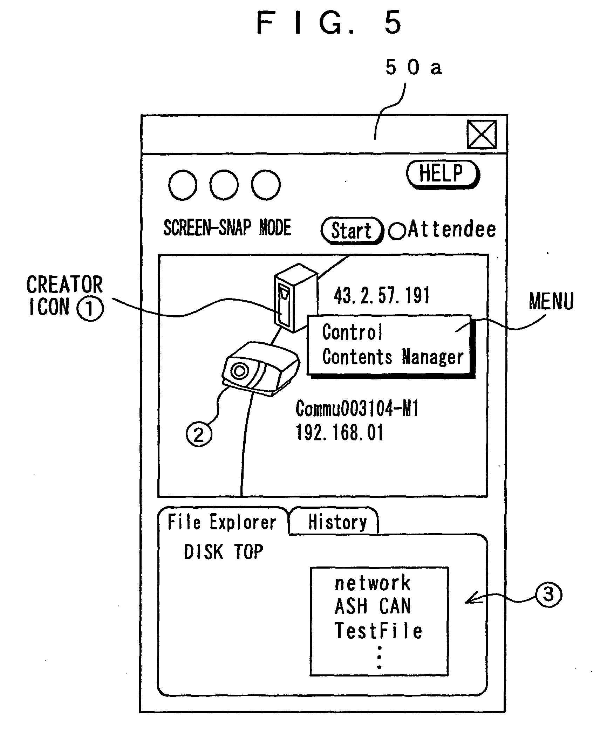

When the creator icon is clicked on with a right mouse button, such a menu screen as shown ion FIG. 5 is displayed and, when "CONTROL" is selected on this menu screen, the control screen 50c shown in FIG. 4 is displayed. When the MEMO key ⑧ is operated on the control screen, the memo screen 50d is displayed at a screen position shown in FIG. 4 so that sentences etc. can be input in it. The memo screen 50d occupies a space of four to six lines.

When "Contents Manager" is selected on the menu screen shown in FIG. 5, a list menu (creator contents manager screen) for conference contents saved in the creator 1 is displayed.

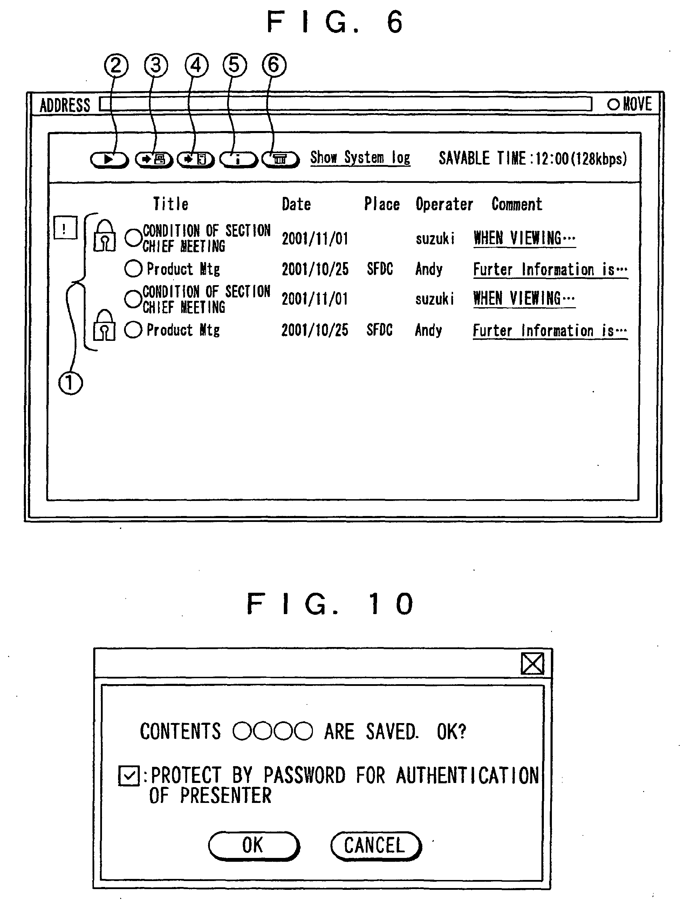

FIG. 6 shows an example of this screen displayed. On this screen are displayed a contents list ① saved in the creator 1 as well as soft keys for selecting an operating mode for a selected contents list. In the present embodiment, there are displayed a Review key ② for reproducing selected contents, a transfer-to-client key (Download-to-My-Computer key) ③ for transferring the selected contents to the client PC2, a transfer-to-server key (Upload-to-Server key) ④ for transferring the selected contents to a server, a details key (Show-Contents-Information key) ⑤ for viewing detailed information of the selected contents, a Delete key ⑥ for erasing the selected contents, etc.

Although the above-mentioned network electronic conferencing system 100, especially, such an aspect of system as shown in FIG. 1, is an electronic conferencing system in a case where a network is built up only in one conference room, a network electronic conferencing system other than the above-mentioned network electronic conferencing system 100 can be built up.

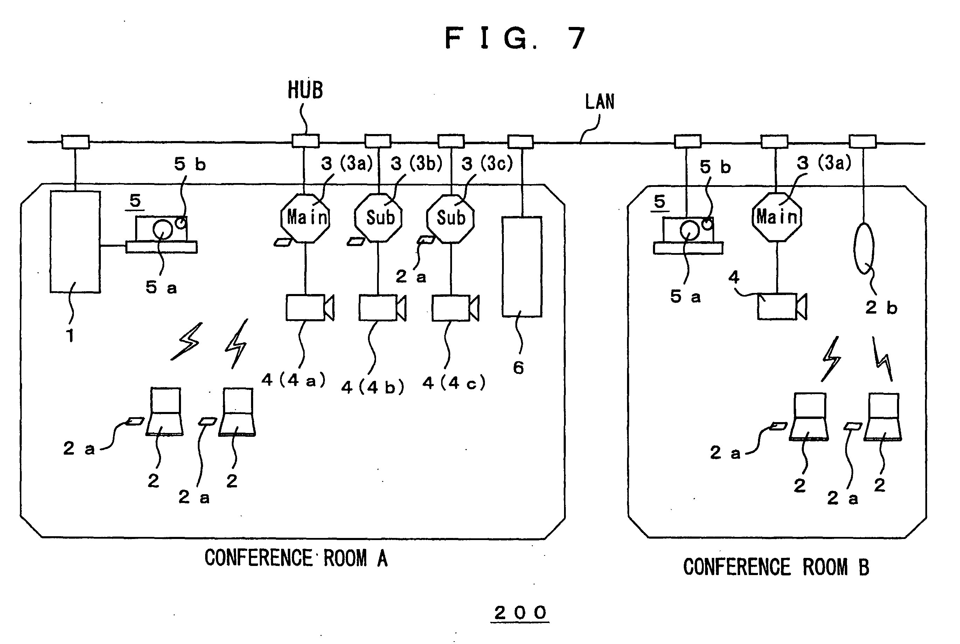

A network electronic conferencing system 200 shown in FIG. 7 is applied to a case where a conference is advanced with presentation being performed utilizing a plurality of, for example, two conference rooms.

Although conference rooms A and B in this case have a same system build-up, they may be of different in some cases. FIG. 7 shows an aspect for such a case. A system of the conference room A is equipped with a creator 1, client PCs 2, communicators 3, projectors 4 connected to the communicators 3, and a moving picture/audio input apparatus 5. The three projectors are provided. Therefore, the number of communicators 3 provided is three. As communication means, a wireless LAN card 2a is used.

The conference room B also has the same configuration but, in this embodiment, is equipped with only one projector 4 and so one communicator 3 is installed in it. Further, the conference room B is configured so that the client PCs 2 and the communicator 3 etc. may communicate with each other via an access pint 2b.

The two conference rooms A and B are connected to each other by an LAN. It is possible to participate in presentation in the conference room A through the access point 2b using the client PCs 2 in the conference room B.

In this case, if a presenter in, for example, the conference room A transfers presentation materials to the communicators 3 in the conference room A to display the materials on the projector 4 for the main communicator, the same presentation materials are transferred also to the communicator 3 in the conference room B and displayed on the projector 4 in it.

If, then, a pointer on a display screen is moved using the mouse etc., a pointer in the conference room B is also displayed in the same position by interactive display control. That is, the conference rooms A and B have a mirror display configuration.

This holds true also with a case where the materials are transferred from the conference room B to the conference room A. In this case, however, none of the sub-communicators in the conference room A is used because the conference room B has only one projector.

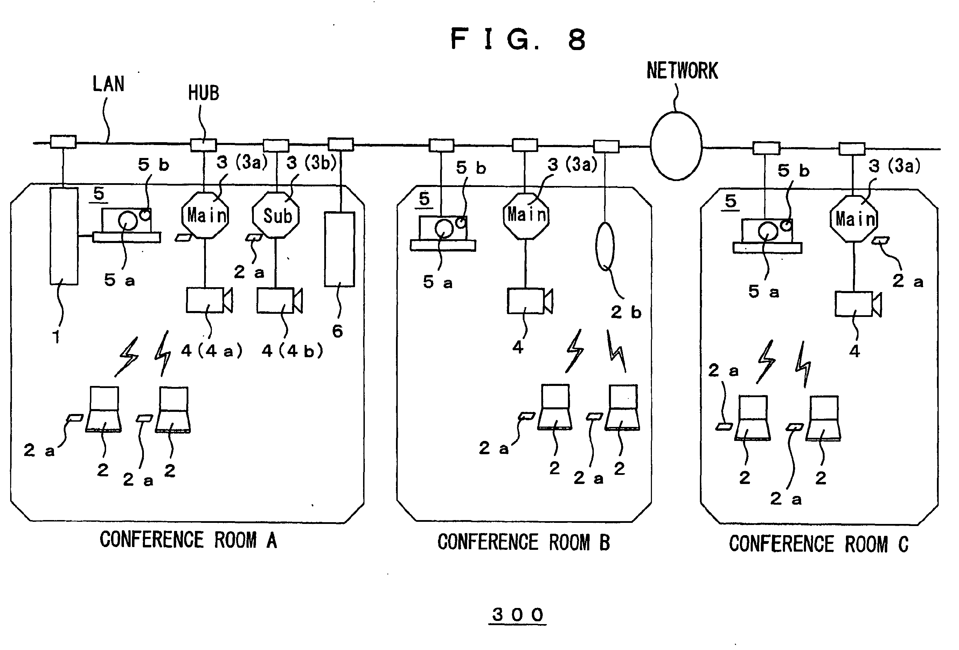

FIG. 8 shows a case where the present embodiment has been applied to a network electronic conferencing system 300 when presentation is performed between conference rooms positioned at two remote locations.

This system 300 has a configuration in which conference rooms A and B are coupled to each other by an LAN and a communication line of the conference rooms A and B and that of a remote-located conference room C are connected to each other by a network. It is assumed that such a system as described with reference to FIG. 1 or 7 is built up in each of the conference rooms A, B, and C. Therefore, detailed description of each of the system components is omitted. It is sufficient to commonly install one creator 1 and one server 6.

In this case also, mirror display of presentation materials by use of a projector 4 provided in each of the conference rooms is realized in communication between communicators 3 of the conference rooms A, B, and C, so that conference attendees can participate in conferencing while viewing the same displayed materials simultaneously. Further, even between the remote locations, it is possible to display pointers in synchronization with each other on the same display screen according to movements of the mouse.

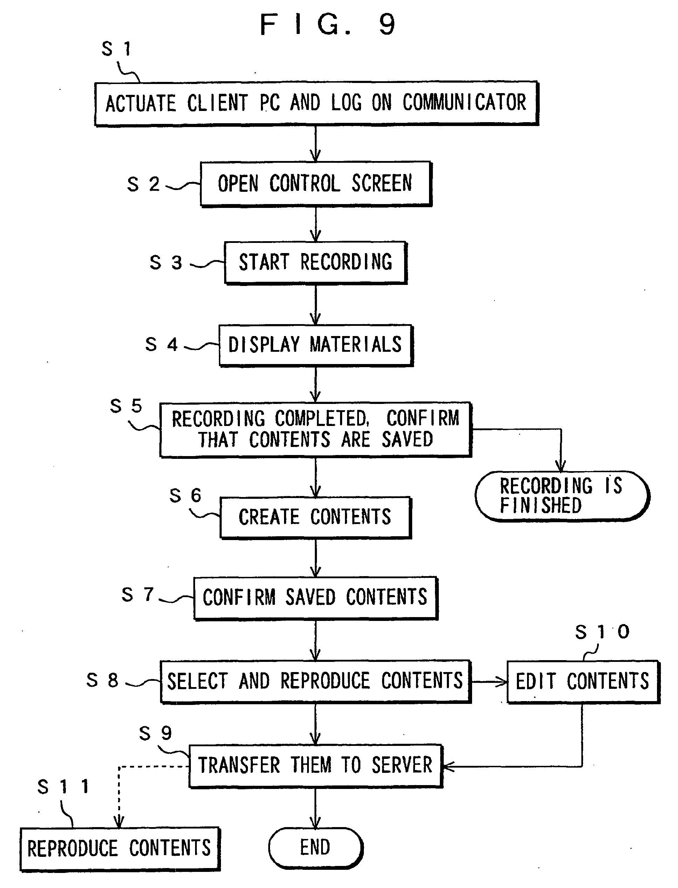

The following will describe in details operations of this network electronic conferencing system 100 with reference to FIG. 9.

First, at step S1, electronic conferencing application software is activated using the client PC 2 of an attendee of a conference, to log on the communicator (or main communicator) 3.

In this case, the first conference attendee sets a password, so that the subsequent attendees can attend the conference by entering this password, as already described. The password is not a unique value determined for the electronic conference system beforehand, so that it is possible to eliminate such an improper problem that the electronic conferencing system cannot be actuated because the password is forgotten or mistaken.

When a conference attendee opens the control (CONTROL) screen, which is an operating screen of the creator 1, at step S2, only that client becomes a clerical client PC (see FIG. 4).

When the icon ① (see FIG. 4) is clicked on with the right mouse button on a GUI screen of the client PC 2 to select "CONTROL" from a displayed menu, the control screen 50c is displayed (see FIG. 4).

When the REC key ④ (see FIG. 4) is pressed on the control screen at step S3, the moving picture/audio input apparatus 5 is actuated to start recording an image of the conference.

If the MEMO key ⑧ (see FIG. 4) is pressed on the control screen 50c, on the other hand, the memo screen 50d as shown in FIG. 4 is opened to enable entry of texts. When the SEND key is pressed, entered texts are taken into the creator 1.

When a presentation material is dragged from the file list ③ of the client PC 2 to the icon ② of a projector 4 on which the material is desired to be displayed and dropped there, the presentation materials are transferred to a creator 3, so that the presentation materials selected from the file list is displayed on a screen of the projector 4. At the same time, the presentation materials and page turn-over information etc. are saved on a hard disk in the creator 1.

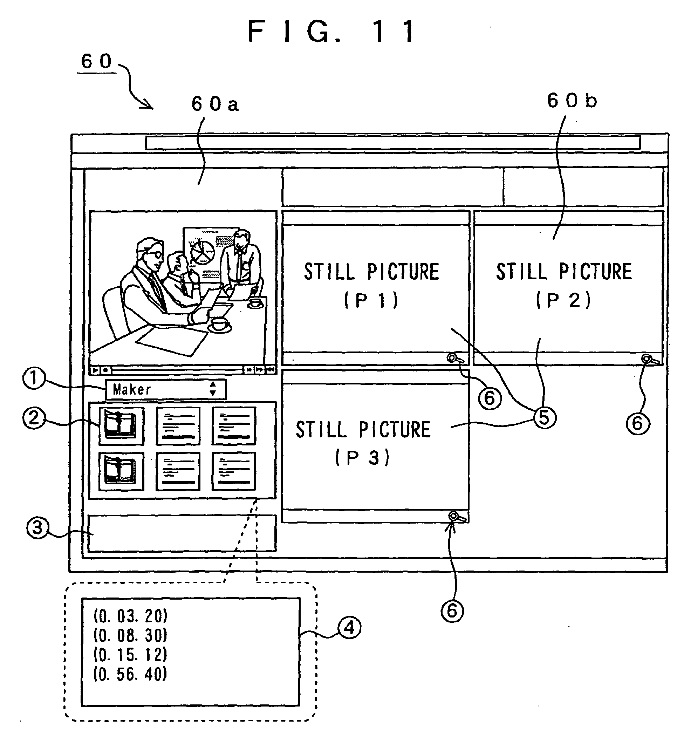

At step S5, the STOP key ⑤ is pressed on the control screen in order to finish the recording operation. When the key is pressed, a saving confirmation screen as shown in FIG. 10 is displayed at the clerical worker-side client PC 2. Contents except for save processing are erased. When such a saving operation is performed, conference contents are created automatically at step S6. That is, at this step S6, the conference contents are created on the basis of still picture information from the communicator 3 and moving picture/audio information from the moving picture/audio input apparatus 5. File data of the conference contents is converted into HTML-format file data so that the conference contents can be referenced through a network such as the Internet.

At step S7, when the conference contents are created completely, the creator contents manager screen is displayed, to enable the conference contents saved in the creator 1 to be confirmed (see FIG. 6).

At step S8, conference contents one wishes to view can be selected on this creator contents manager screen to reproduce its details. The contents whose details have been confirmed can be transferred to the server 6 and so saved (step S9).

Further, if one wishes to reproduce the conference contents and edit its details at step S8, he or she can operate the creator contents manager screen at step S10 to transfer the conference contents to the client PC 2 side to edit it using known edit software. The server contents after being edited are transferred to the server 6 and saved (step S9).

At the client PC 2, who is a clerical worker, it is possible to reproduce the conference contents on the server 6 (step S11). FIG. 11 shows one example of contents-reproduction screen.

The contents-reproduction screen 60 has such a screen configuration that, as shown in the figure, the screen is split into an upper left portion showing a moving picture reproduction portion 60a that video-records a condition of a conference and a right half portion showing a still-picture reproduction portion 60b that reproduces presentation materials, which is still picture information used in the conference, so that these portions can be displayed simultaneously on the same display screen.

Therefore, the still picture reproduction portion 60b for reproduction of presentation materials varies in display pattern according to the maximum number of projectors that are installed in one conference room. In the present embodiment, up to three projectors can be connected in configuration, so that up to three sheets of presentation materials may be displayed in some cases, and thus, the still picture reproduction portion can be split into up to four parts in display pattern configuration of the reproduction screen.

This display pattern is given in templates, so that the display pattern templates (templates 1-3) are selected according to the number of projectors to be used. FIG. 11 shows a case where the template 3 of display pattern is employed when three projectors are used. A still picture P1 indicates the materials ⑤ displayed using a projector 4a and, similarly, still pictures P2 and P3 indicate the materials ⑤ displayed using projectors 4b and 4c respectively. In reproduction of contents, as time passes by, the materials ⑤ that are displayed in this still picture reproduction portion is switched automatically. Details of the templates 1 and 2 of display patterns will be described later.

In the moving picture reproduction portion 60b, other than the displayed image as described above, there is displayed View switch-over display ① below its image display portion. A display portion ② further below this is split into two parts, where up to six sheets of presentation materials displayed by the projectors are displayed in thumbnails. If a plurality of projectors is used, materials displayed on selected one of the projectors are displayed in thumbnails.

When an arbitrary one of the thumbnails is selected, a moving picture displayed above is synchronized with it and the thumbnail is shifted to a displayed time, so that its normal reproduction starts from that time.

This thumbnail display ② can be switched to the above-mentioned mark display ④. Switching-over between the thumbnail display and the mark display is selected at the View switch-over display ①.

Titles ("Untitled" if no title is given) and times attached in edit processing are displayed in order in which the MARK key ⑦ on the control screen has been pressed during the conference. When a title in a mark display field ④ is clicked on with the mouse, the moving picture displayed above is also synchronized with this, to be shifted to its time, and its normal reproduction starts. With this, always the moving picture and the still picture (presentation materials) are displayed in synchronization with each other. In reproduction, their displays are each switched as time passes by.

Below each of the display screens of the above-mentioned still picture reproduction portions 60b, a display zoom-in key ⑥ is arranged so that when this is selected, a still picture being displayed may be switched into a maximum display pattern (original-size display).

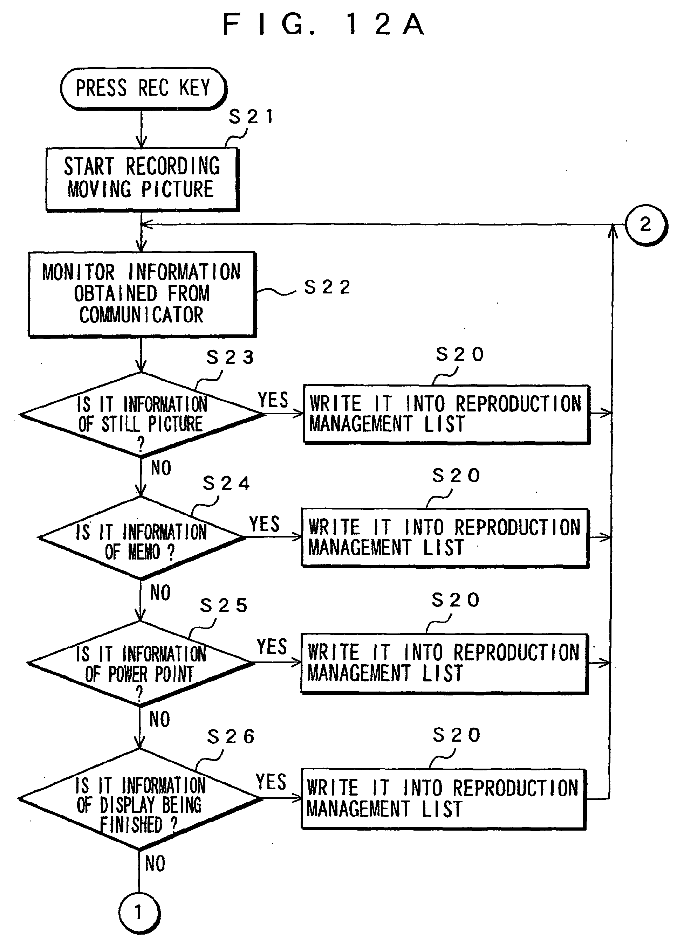

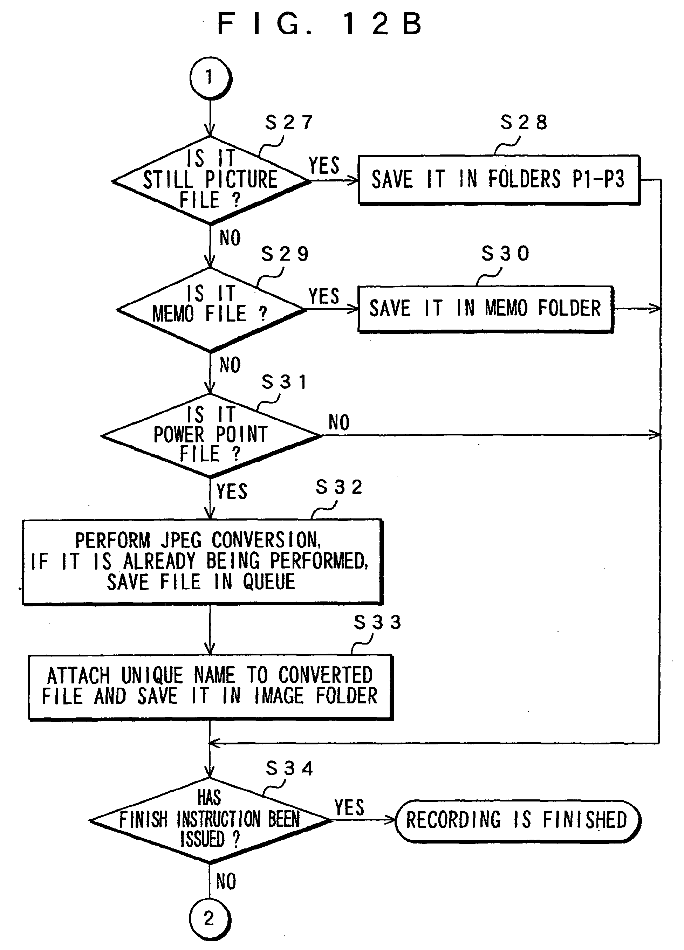

The following will describe recording operations of the creator 1 with reference to flowcharts of FIGS. 12A and 12B.

The creator 1 records moving pictures in accordance with a recording instruction from the client PC2 and records and saves presentation information sent from the communicator 3. These presentation materials are supposed to include various items of data such as still pictures themselves, materials created using materials-creating software (presentation software), for example, Power Point (presentation software of MICROSOFT), sentence display files created in a portable document format (PDF), image data created in a graphic interchange format (GIF), and file data created using tabular software.

FIG. 12A is referenced. First, when the REC key is pressed utilizing the control screen at the client PC 2, the creator starts recording a moving picture (step S21).

Next, at step S22, the creator monitors information from the communicator 3.

Next, at step S23, the creator checks attribute information for still picture information transferred from the communicator 3 and, if the still picture information is a still picture file, it describes in a management list (reproduction management list) the attribute information that is a still picture file as management information (step S20).

Similarly, if the creator confirms that it is attribute information (text file) about a memo at step S24, it describes such information in the reproduction management list (step S20) and, if it is attribute information about a file created by Power Point, the creator describes such information (steps S26, S20).

If the input information is none of these, the creator decides whether the attribute information indicates an end of display, and if it is display end information, the creator describes the information in the reproduction management list similarly (steps S26, S20).

When having finished deciding the attribute information in steps S20-S26 of FIG. 12A, the process subsequently goes to a step for deciding a type of still picture information itself. It is described with reference to FIG. 12B.

First, if the still picture information transferred at step S27 is a still picture file, the creator saves it in a corresponding folder (step S28).

If three projectors 4 are used in the electronic conferencing system, the creator copies materials (still picture file) used at the projector 4a into a P1 folder, materials (still picture file) used at the projector 4b into a P2 folder, and materials (still picture file) used at the projector 4c into a P3 folder.

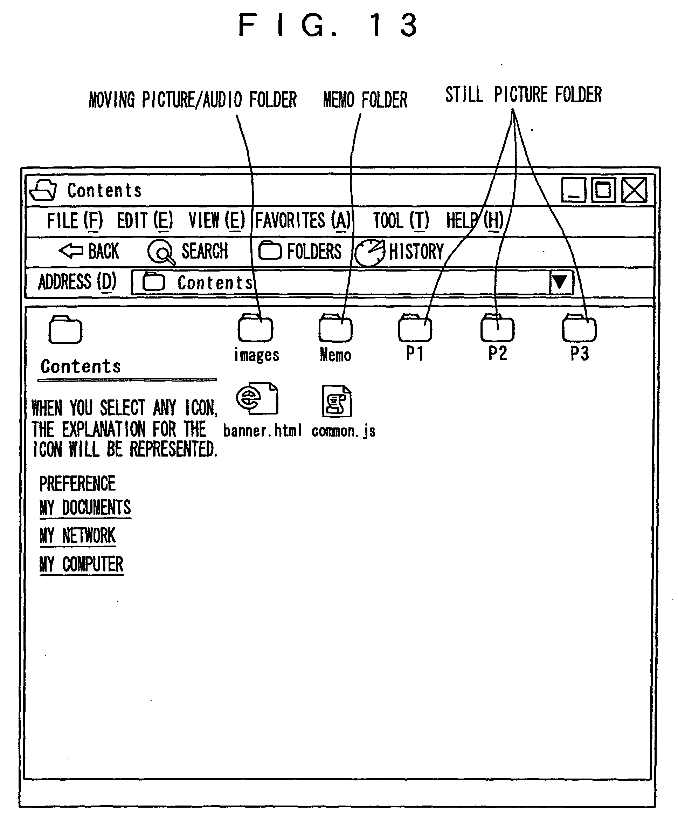

FIG 13 shows a directory structure of the recorded data as described above. As illustrated in the figure, moving picture or audio, memo, and still picture are respectively recorded in separate folders.

By thus specifying a folder into which the materials are to be saved in accordance with the projector used in presentation, it is possible to simultaneously reproduce and display a plurality of presentation materials on a contents-reproduction screen using a target display template when reproducing conference contents.

Next, if it is decided to be a memo file at step S29, the creator saves this memo file in a memo folder (step S30). If the transferred still picture information is a Power Point file, the creator performs video compression on this Power Point file at step S32. As compression format, for example, a JPEG format can be utilized which is often used in a network such as the Internet. The creator gives a unique name to a new file thus converted into a JPEG file and saves it in an image folder (step S33). If it must wait in compression processing at step S32, the creator temporarily saves the file in a queue. At step S34, it then determines whether an instruction to finish the recording operation has been issued. If the instruction has been issued, the recording operation is finished. If no instruction has been issued, the process goes back to step S22.

The process repeats the above-mentioned processing of monitoring the attribute information and saving it into a specific folder as determining a type of still picture information, at a timing when information is input from the communicator 3 (step S22).

Note here that the attribute information sent from the communicator 3 described with reference to FIG. 12A may include the following:
A) Display page of Power Point (display-starting time, page information at the time of page turn-over, projector No., etc.);
B) File name of JPEG file (including display-starting time, projector No., etc.);
C) File name of GIF file (including display-starting time, projector No.); and
D) All-display end.

Based on these pieces of information, a reproduction management list (database) is created.

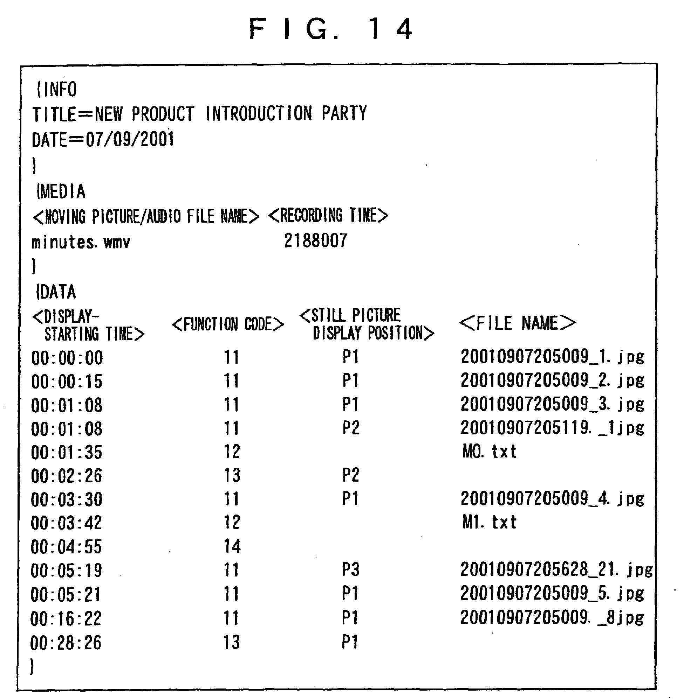

FIG. 14 shows one example of the reproduction management list. In it, display-starting time refers to a point in time when display of a still picture or a memo starts or a relative point in time as measured from the beginning of a moving picture.

A function code indicates the following:
11: A still picture is displayed at a still-picture display position (positions P1-P3 that correspond to the projectors 4a-4c respectively).
12: A memo is displayed on the memo screen.
13: Display of a still picture in the still picture display portions is erased.
14: Memo display is erased.

A file name refers to the name of a file to be displayed. If a Power Point file is converted into a JPEG file, it is assigned a name in, for example, the following format:
converted time page number.jpg (converted time=YYYYMMDDhhmmss)

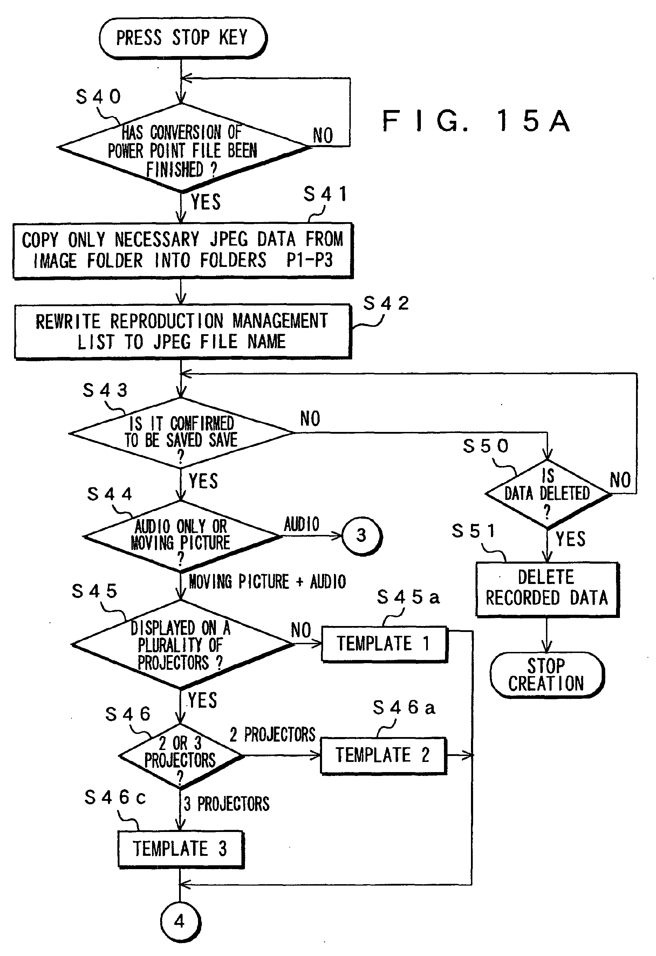

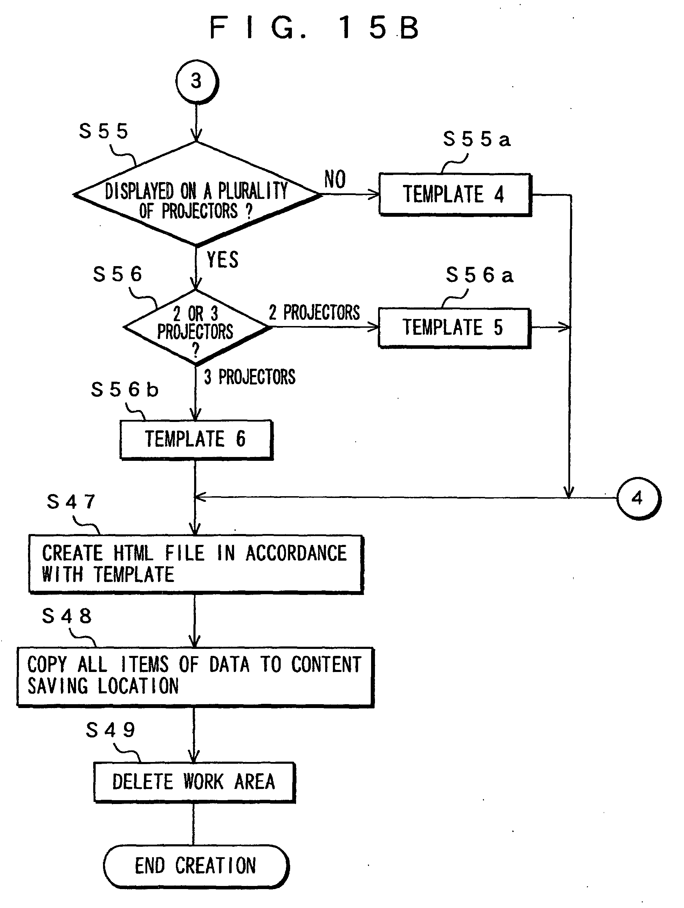

Subsequently, when the recording is finished, the moving picture/audio information and still picture information that have been recorded in such a manner are automatically reorganized into conference contents, which are used as proceedings of the conference. The conference contents are created as contents that can be retrieved and viewed by Web Viewer. This is described with reference to FIGS. 15A and 15B below.

FIG. 15A is a flowchart of contents-creating operations. To finish recording on the side of the creator 1, press the STOP key ⑤ on the control screen. When the recording is finished, simultaneously, contents creation processing starts, so that, if there is present a Power Point file, first the process confirms that this file has been converted into a JPEG file (step S40).

When conversion into the JPEG file is finished, the process copies only necessary JPEG data from the image folder to a corresponding one of the folders P1-P3 at step S41. This is done so in order to copy a JPFG-converted file also into the same folder if the same projector has been used.

At step S42, the process rewrites a file name of the reproduction management list to a JPEG file name and gives an extension to it. At the next step S43, the process checks whether it is to be saved as conference contents (see FIG. 10).

If an instruction is received to the effect of not to save at step S43, the process checks whether the file data should be removed entirely at step S50 and, if such is the case, deletes all data recorded at step S51 and stops the contents creation processing.

If processing to save the file is selected, on the other hand, the process checks whether information sent from the moving picture/audio input apparatus 5 of data saved at step S44 includes audio only or both of a moving picture and audio (step S44). This check is performed because processing to be performed is different between a case where it includes audio only and a case where it includes both a moving picture and audio.

The case where it has both of a moving picture and audio is described first as follows: in this case, the process checks the number of the projectors used in presentation at step S45. If more than one projectors are not used, that is, one projector has been used, the process selects the display template 1 as contents-displaying template (step S45a).

If two projectors are used, the process selects the display template 2 (steps S46, S46a) and, when they are used three, the process selects the display template 3 (steps S46, S46c).

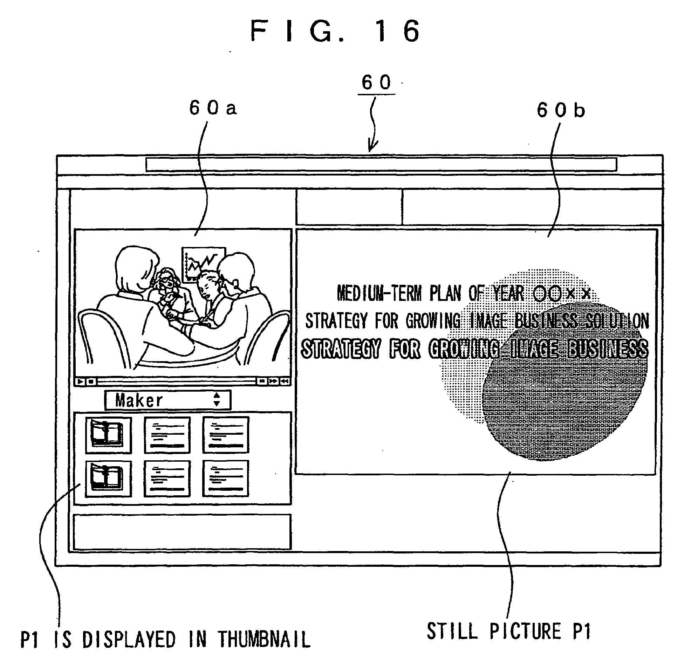

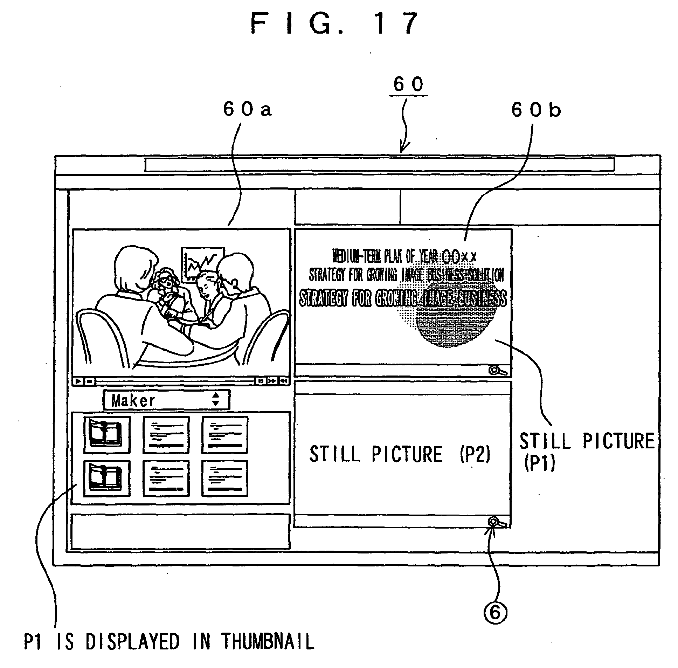

Note here that a display size employed in the still picture reproduction portion in a case where the template 1 is selected as the display template becomes the largest one of display sizes, one example of which is shown in FIG. 16. If the template 2 is selected, on the other hand, still picture information from the two projectors is displayed simultaneously on the screen, so that as shown in FIG. 17 they are displayed one above the other. Therefore, the display size becomes a little smaller. If three projectors are used, such a display pattern as shown in FIG. 11 is employed. The display size thus employed is the smallest. FIG. 11 gives a display example in a case where an aspect ratio of the screen is 4:3. Incidentally, in the present embodiment, the smallest display size comprises 320 by 240 pixels.

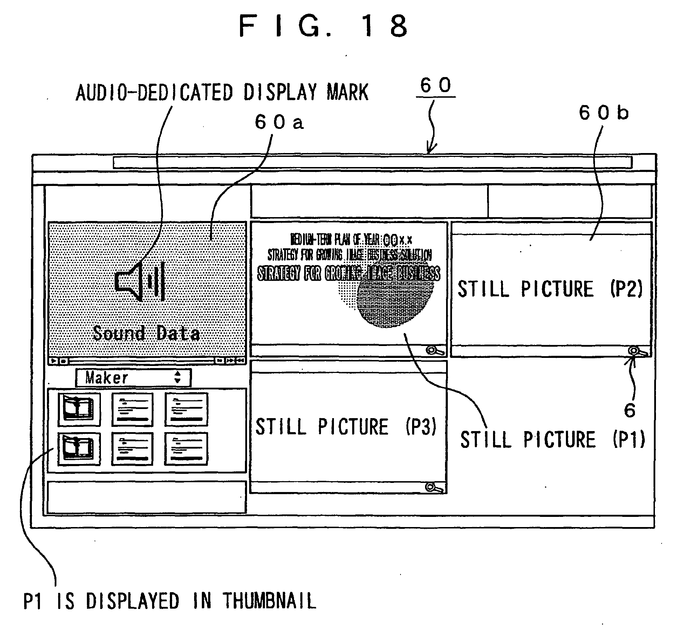

Next, as indicated by step S47 in FIG. 15B, before an HTML file is created in accordance with the selected template, processing in the case where the data includes audio only is also performed. In the case where the data consists of audio only, only a symbol mark indicating audio only is displayed in place of an image of the conference in the moving picture reproduction portion and one of the templates is selected in accordance with the number of the projectors to be used. Therefore, aspects of the templates selected at steps S55, S55a, S56, S56a, and S56b are the same as that in a case where the data includes both a moving picture and audio and their detailed description is omitted. Note here that the template 4 corresponds to the template 1 and the templates 5 and 6 correspond to the templates 2 and 3, respectively. Incidentally, one example of a reproduction screen of contents in a case where three projectors are used is shown in FIG. 18.

The data including a moving picture and audio or audio only for which a display template has been determined is converted into an HTML file in a condition where it matches this template, at step S47.

At the next step S48, all items of the data, that is, the moving picture/audio data as well as JPEG data in the reproduction management list, still picture file data (JPEG data), JPEG data in the Power Point file, and text data are all copied to a content saving location. Then, the process deletes a work area, which has been reserved on working memory 1b of the creator 1, and finishes the automatic conference contents creation processing (step S49).

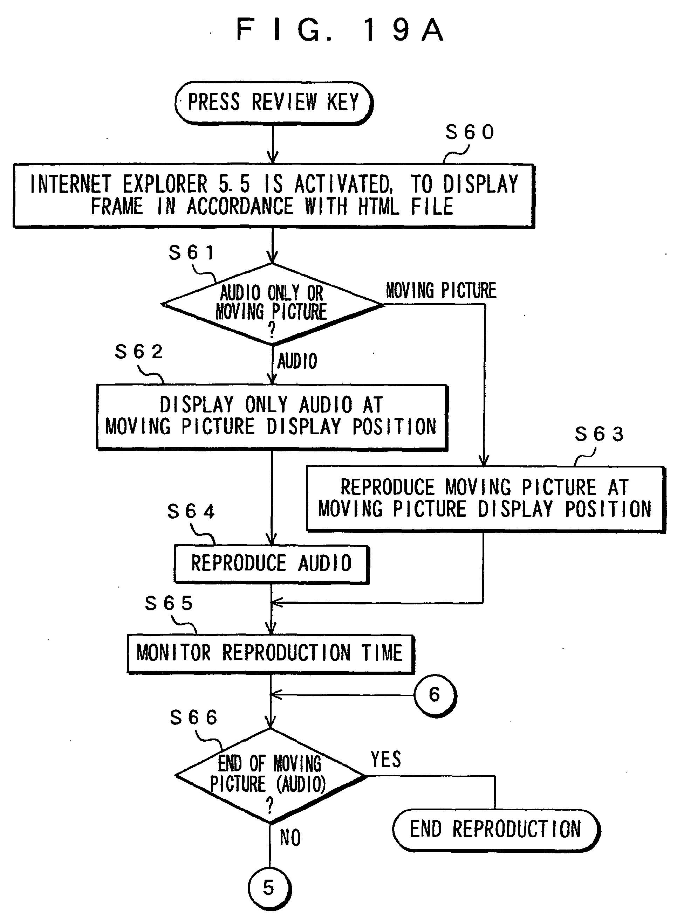

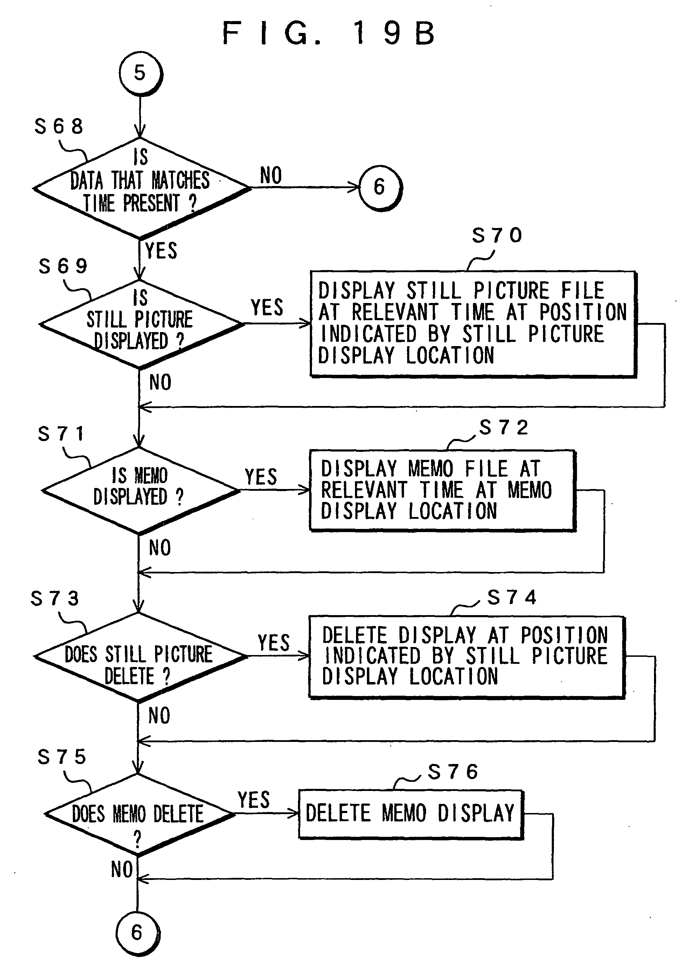

The following will describe reproducing operations for conference contents with reference to flowcharts of FIGS. 18B and 19.

A menu is selected and the creator-contents-manager screen shown in FIG. 6 is opened. Then, when conference contents desired to be viewed is instructed and the Review key ② is pressed, Web browser (e.g., Internet Explorer) is activated, so that details of files are displayed in frame units in accordance with the HTML file (step S60).

If the data includes audio only at step S61, the process displays the symbol mark indicating audio only at a moving picture display position at step S62 (see FIG. 18). Then, the process reproduces the audio (step S64). If the data includes a moving picture, the process reproduces the moving picture at the moving picture display position at step S63.

Then, the process monitors reproduction time at step S63 and, if reproduction of the moving picture or audio is yet to be at the end (step S66), checks whether there is still picture information (HTML-format file data) that matches this reproduction time as shown in FIG. 19B (step S68).

In a case where there is file data that matches reproduction time of a moving picture etc. and if it is a still picture file, the process displays a still picture file of the relevant time in a specified one of the display areas P1-P3 (steps S69, S70). If the file data is a text file (memo information), the process displays it in the memo display area at the relevant time (step S72).

Further, the process monitors not only display of the screen but also its erasure. If the reproduction management list includes information for erasure of a still picture or memo, the process monitors when time for the erasure comes and, when the time has come, erases display at its display position if it is a still picture (steps S73, S74). If it is a memo, the process performs processing for erasing display at its display position (steps S75, S76).

The process performs such display check processing and the erasure check processing until reproduction of a moving picture or audio is finished (step S66) and, when it is finished, ends the conference content reproduction processing mode.

As described above, it is capable of recording a state where a network conference is advanced and creating and reproducing the contents viewable in the network, but there are some cases such that, when the contents includes unnecessary contents, the unnecessary ones should be deleted or additional contents, for example, a still picture and the like should be added. This necessitates the contents-editing.

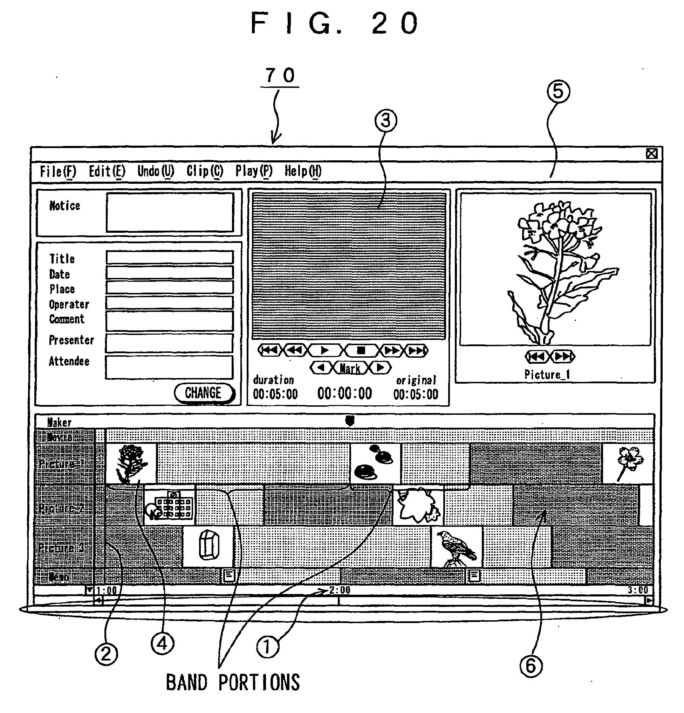

Fig. 20 shows an editing screen 70 of contents-editing software related to the present invention. As shown in FIG. 20, on an upper left side of the screen, a basic information such as title of the selected contents is displayed. On an upper right side of the screen, still picture display area ⑤ is present. At middle thereof, moving picture display area ③ is present. At lower side of the screen, an editing area ⑥ in which the recorded moving picture, still picture, and memo are respectively arranged along a time axis is present.

Symbol ① shown in this figure represents the time axis. The time axis to be displayed on the screen may vary in a unit of time to one, two, five, ten fifteen, thirty, and sixty minutes, respectively, and any section protruded from the unit can be searched and displayed using a scroll bar.

Symbol ② shown in this figure represents a current time line, which indicates current time. Based on the time line, the still picture is inserted, the moving picture is reproduced, and the still picture is displayed. The still picture and the moving picture are cut and merged indicating a cut-in point and a cut-out point visibly with a moving picture position and a display timing of the still picture being confirmed with the time line.

Symbol ③ shown in this figure represents the moving picture display area for displaying the moving picture corresponding to the current time.

Symbol ④ shown in this figure represents a thumbnail for a still picture that is subject to the display.

Symbol ⑤ shown in this figure represents the still picture display area, which displays a still picture corresponding to current time.

In the editing area ⑥, display bands for displaying moving picture or audio information, for displaying still pictures, and for displaying memo are arranged along the time axis. The display band for displaying the still picture displays its display state in a sprite way that a portion of the display band corresponding to a display period of each still picture is different from a remaining portion thereof and thumbnail ④ of the sill picture corresponding to the display band is displayed. The display band for displaying the memo displays its display state in a sprite way that a portion of the display band corresponding to a display period of the memo is different from a remaining portion thereof and icon for the memo corresponding to the display band is displayed. Further, clipping a right edge of the display band for displaying the memo or the still picture and moving it allows a length of band portion to alter to enable the display time to be changed.

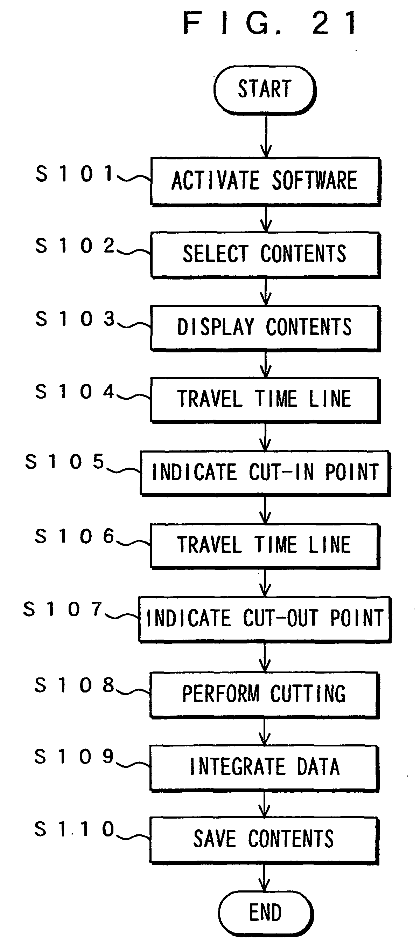

The following will describe editing for cutting the contents all together with reference to FIG. 21. FIG. 21 is a flowchart of editing for cutting the contents all together.

If the contents created by the creator 1 are edited to cut them all together, editing software is first activated at step S101. Next, at step S102, the contents to be edited are selected. The selected contents are displayed on an editing screen of the editing software at step S103 (see FIG. 20).

Next, at step S104, the moving picture position and the display timing of still picture are confirmed using the time line with the time line travelling to select a point to be cut.

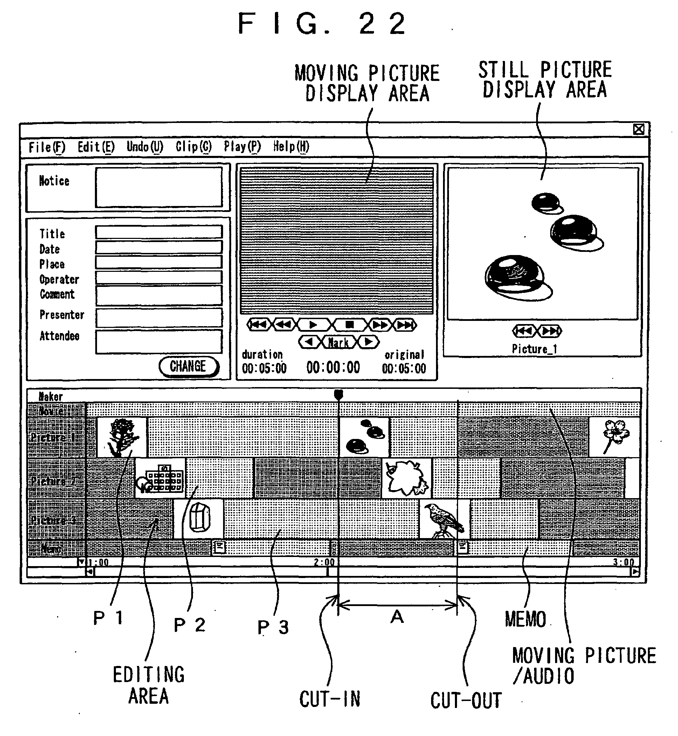

Next, at step S105, the cut-in point is indicated on the basis of the time line (see FIG. 22).

Next, at step S106, the time line is traveled to an end of an area to be cut.

Next, at step S107, the cut-out point is indicated on the basis of the time line (see FIG. 22).

Next, at step S108, the moving picture, still picture, and memo within a period of specified time (see a range A shown in FIG. 22) are cut all together.

Next, at step S109, after cutting, details in the contents are automatically integrated to prevent the display timings of the contents from shifting from each other.

Next, at step S110, the contents thus integrated are saved and then the editing is finished. This allows recorded unnecessary contents to be deleted.

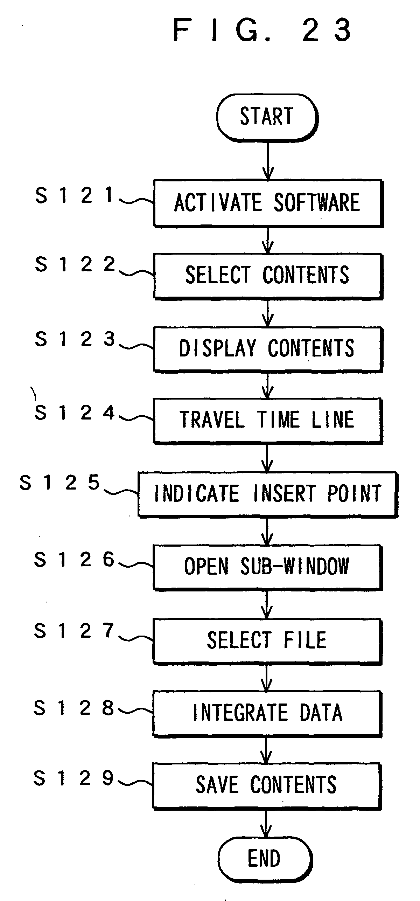

The following will describe editing for inserting the contents of still picture. FIG. 23 is a flowchart of inserting the still picture.

If still picture is inserted into the contents created by the creator 1, editing software is first activated at step S121. Next, at step S122, the contents to be edited are selected. The selected contents are displayed on an editing screen of the editing software at step S123 (see FIG. 20).

Next, at step S124, the moving picture position and the display timing of still picture are confirmed using the time line with the time line travelling to select a point to be inserted.

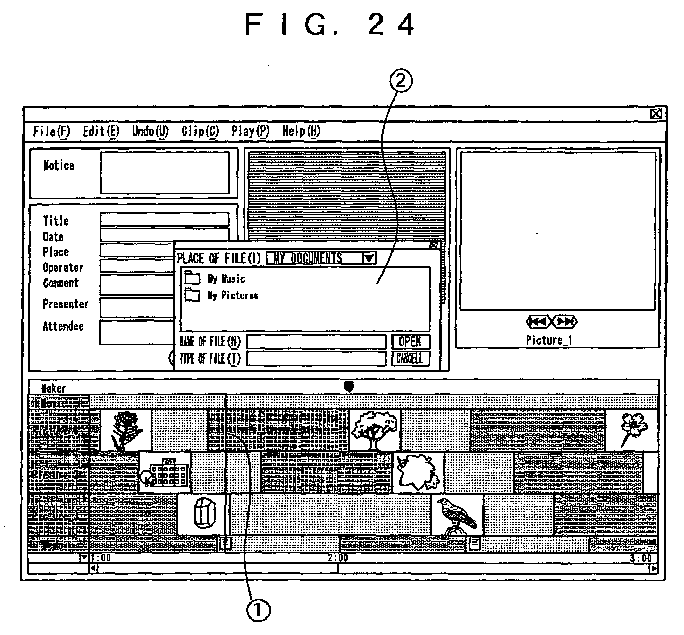

Next, at step S125, the insert point is indicated with the current time line being met to time when the still picture should be inserted (see symbol ① shown in FIG. 24).

Next, at step S126, a right mouse button is clicked on the time line to display sub-window (see FIG. 24). File import related to the displayed sub-window is then selected.

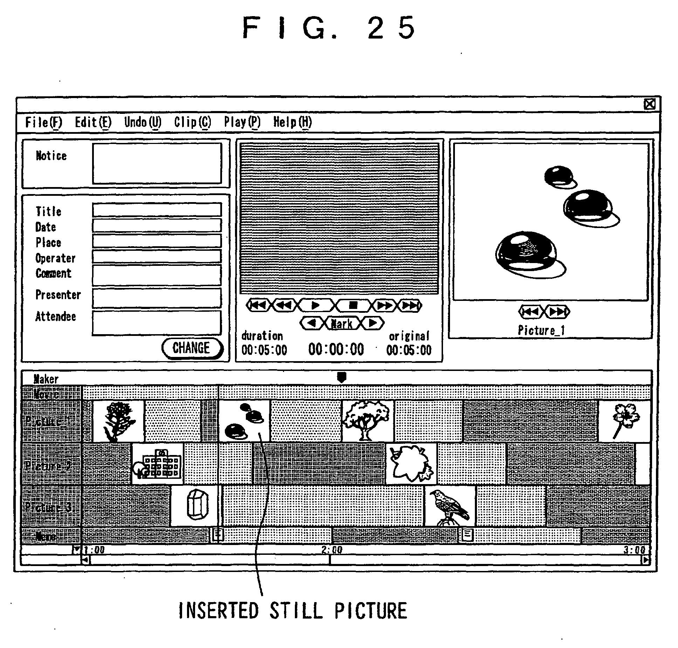

Next, at step S127, a file to be inserted is selected (see symbol ② shown in FIG. 24) to insert the file into a position specified. FIG. 25 shows inserted state thereof.

Next, at step S128, after inserting, data is automatically integrated and managed like the above-mentioned reproduction management list to prevent the display timings of the contents from shifting from each other.

Next, at step S129, the contents thus integrated are saved and then the editing is finished.

This allows the still picture that would be inserted to be inserted at a specified timing.

Note that if the still picture is deleted, the still picture to be deleted is selected with the time line traveling and a right mouse button is clicked to delete the still picture.

The following will describe more in detail a processing method for selecting a previously registered multiple templates automatically when the contents created by the network electronic conference system 100 are displayed.

As shown in FIG. 1, the network electronic conference system 100 is provided with three communicators 3 and three projectors 4, respectively, by which three predetermined types of the templates are previously prepared. For example, if, during a conference, one projector is used, the template 1 shown in FIG. 16 is used. If two projectors are used, the template shown in FIG. 17 is used. If three projectors are used, the template shown in FIG. 18 is used. Note that the display screen (template 6) in FIG. 18 relates to only audio without any moving picture so that still picture reproduction portion is common in the template 3.

Further, when starting the record, a directory is generated for each conference and sub-directories of image, Memo, P1, P2, and P3 are generated below the directory so that data displayed by the projector of the main communicator 3a is stored in P1, data displayed by the projector of the sub-communicator 3b is stored in P2, and data displayed by the projector of the sub-communicator 3c is stored in P3 (see FIG. 13).

When the record of conference is finished and OK button is pressed for the saving confirmation therefor, the contents-creation starts based on the recorded informational data. For example, if at step S44 in FIG. 15A, data is determined as sharing the moving picture and the audio, template selection processing starts on the data sharing the moving picture and the audio.

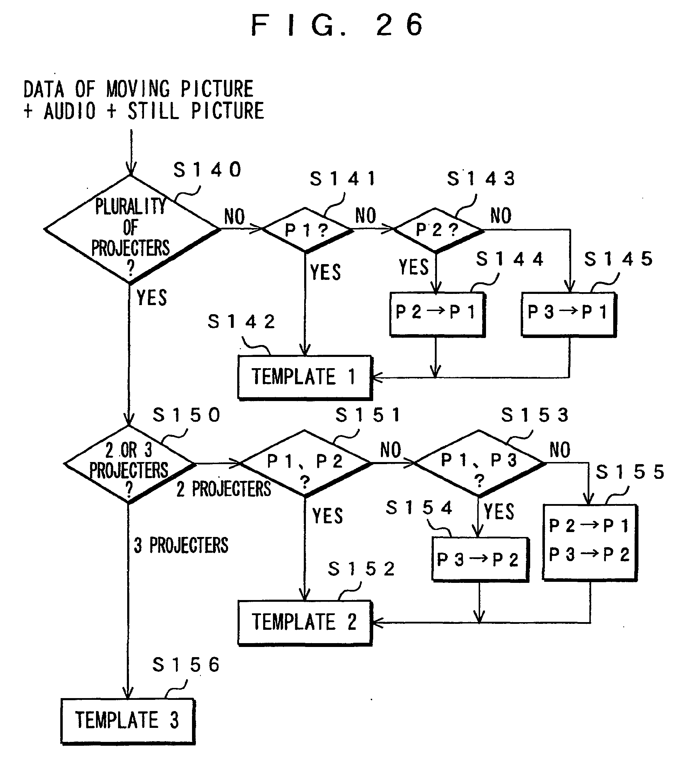

FIG. 26 is a flowchart of template selection.

First, at step S140, the process checks the number of the projectors used. If more than one projectors are not used, that is, one projector has been used, the process confirms sub-directories of data at step S141. If data is saved in P1, the process selects the template 1 at step S142. If no data is saved in P1, the process confirms whether data is saved in P2 at step S143. If data is saved in P2, the process carries data of P2 to that of P1 at step S144 and then, the template 1 is selected at step S142. On the other hand, if no data is saved in P2 at step S143, the process carries data of P3 to that of P1 at step S145 and then, the template 1 is also selected at step S142.

If a result of checking the number of the projectors at step S140 indicates that multiple projectors are used, it is determined whether two or three projectors are used at next step S150. If two projectors are used, the process confirms sub-directories of data at step S151. If data is saved in P1 and P2, the process selects the template 2 at step S152. If no data is saved in any P1 and P2, the process confirms whether data is saved in P1 and P3 at step S153. If data is saved in P1 and P3, the process carries data of P3 to that of P2 and then, the template 2 is selected at step S152. On the other hand, if data is saved in P2 and P3 at step S153, the process carries data of P2 to that of P1 and data of P3 to that of P2 at step S155 and then, the template 2 is also selected at step S152.

If a result of checking the number of the projectors at step S150 indicates that three projectors are used, that is, data is saved in P1, P2, and P3, the process selects the template 3 at step S156.

Note that if insert processing and delete processing are performed using the above-mentioned editing software, similar processing may be performed.

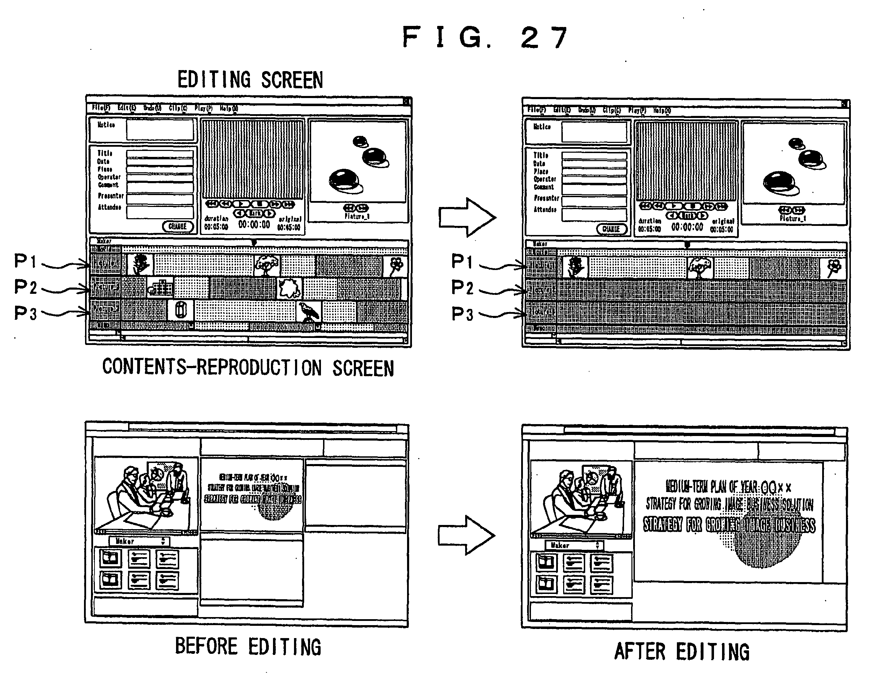

For example, as shown in FIG. 27, if data is saved in each of the sub-directories P1, P2 and P3, and, after editing by deletion has been performed, data of P2 and P3 is deleted so that only data of P1 remains, still picture information stays in each of the display bands for still picture, which correspond to P1, P2, and P3 before editing while the template when one projector is used is automatically selected to reproduce it with reference to the edited contents after editing because still picture information in each of the display bands for still picture, which correspond to P2 and P3, is deleted by editing.

Thus, according to this embodiment, The network electronic conference system 100 comprises the creator 1, the client PC 2, the wireless LAN card 2a for connecting the communicator 3 and the client PC 2, the projector 4, the video camera 5a, the microphone 5b, and the server 6.

According to the invention, multiple pieces of information from the client PC 2 via the video camera 5a, the microphone 5b, and the communicator 3, for example, multiple pieces of information including moving picture or audio and still picture in synchronized with them are transferred to the creator 1 where they are recorded with them being met a predetermined time axis. Then, the creator 1 creates the contents based on these pieces of information thus recorded. Thus, the contents are created on the basis of these pieces of information thus recorded with them being met a predetermined time axis so that editing or the like may be performed on these pieces of information without being oblivious of time for displaying them in a synchronized way, thereby enabling the contents to be efficiently created.

Further, since on the editing screen 70, information including moving picture or audio, still picture in synchronized with them, and memo is visibly displayed with display bands along each time axis using the thumbnail etc. according to time series, it is easily to grasp consecutive relationship between the multiple pieces of information, thereby enabling editing such as a cut to be facilitated.

Further, since the creator 1 selects a template corresponding to a number of the projectors 4, this is, a number of time series of multiple pieces of still picture information and creates the contents using the template, it may create less erroneous contents compared with the contents that is authored with a conventional homepage authoring software by handwork, thereby improving working efficiency thereof.

Although the present invention has been applied to a network electronic conferencing system in the above-mentioned embodiment, the present invention is not limited to it. For example, the present invention can also be applied similarly to a network education system, a network game system, etc.

According to the present invention, the contents are created on the basis of these pieces of information recorded with them being met a predetermined time axis and thus, editing or the like may be performed on these pieces of information without being oblivious of time for displaying them in a synchronized way, thereby enabling the contents to be efficiently created.

Further, since the editing screen displays the multiple pieces of information visibly with the display bands along each time axis using the thumbnail and the like and according to their time series, it is easily to grasp consecutive relationship between the multiple pieces of information, thereby enabling editing such as a cut to be facilitated.

Furthermore, since a template corresponding to the multiple pieces of information is selected and the contents are created using the template, it may create less erroneous contents compared with the contents that is authored with a conventional homepage authoring software by handwork, thereby improving working efficiency thereof.

### INDUSTRIAL APPLICABILITY

As described above, the network information processing system and the information processing method related to the present invention are extremely well applicable to, for example, a network conferencing system, a network education system, a network game system, etc.

## Claims

1. A network information processing system comprising:
at least one information processor having an input operation function and processing arbitrary information;
display device for displaying an image based on at least information transferred from said information processor;
information processing assisting apparatus for assisting network information processing including said display device based on input operation instruction from said information processor;
communication means for connecting said information processing assisting apparatus and said information processor;
a moving picture/audio input apparatus for inputting at least an image or audio except for the information transferred from the information processor; and
information-creating device for recording multiple pieces of information respectively transferred from said information processor and said moving picture/audio input apparatus with the multiple pieces of information being met a predetermined time axis and for creating viewable and audible contents on the basis of these multiple pieces of information.

2. The network information processing system according to claim 1, further comprising information processing device for editing contents created at said information-creating device to create new contents.

3. The network information processing system according to claim 2, wherein said information processing device comprises said information-creating device and said information processor.

4. The network information processing system according to claim 1, wherein said information-creating device is controlled with said information processor via said communication means.

5. The network information processing system according to claim 1, wherein said contents created at said information-creating device is the contents that is capable of being viewed and heard via a network.

6. The network information processing system according to claim 1, wherein said communication means communicates according to wire system or wireless system.

7. An information processing method comprising the steps of:
recording multiple pieces of information respectively transferred from multiple information processors with the multiple pieces of information being met a predetermined time axis; and
creating viewable and audible contents on the basis of these multiple pieces of information thus recorded at the recording step.

8. The information processing method according to claim 7, wherein said contents created at said creating step is the contents that is capable of being viewed and heard via a network.

9. The information processing method according to claim 7, wherein said multiple pieces of information includes at least moving picture or audio information as well as still picture information in synchronized with the moving picture or audio information.

10. The information processing method according to claim 9, wherein said still picture information is compressed image file.

11. The information processing method according to claim 9, wherein said multiple pieces of information includes text information transferred from said information processor.

12. The information processing method according to claim 7, wherein said creating step includes a processing step for editing said created contents to create new contents.

13. The information processing method according to claim 12, wherein in said processing step, said contents are edited using an editing screen; and
wherein said editing screen displays at least said multiple pieces of information with display bands along each time axis and a current time line for indicating current time, said current time line extending perpendicular to said time axis and travelling along said time axis.

14. The information processing method according to claim 13, wherein said multiple pieces of information includes at least moving picture or audio information as well as still picture information in synchronized with the moving picture or audio information;
wherein said display band for displaying said still picture information displays its display state in a sprite way that a portion of the display band corresponding to a period from a display start of each still picture to its display completion is different from a remaining portion thereof and has thumbnail of the sill picture corresponding to said each of the display bands.

15. The information processing method according to claim 13, wherein said editing screen has a moving picture display area for displaying a moving picture corresponding to the current time indicated by said current time line, said moving picture being based on said moving picture information, and a still picture display area for displaying a still picture corresponding to said current time, said still picture being based on said still picture information.

16. The information processing method according to claim 12, wherein in said processing step, cut editing is performed to cut all together said multiple pieces of information includes at least moving picture or audio information as well as still picture information in synchronized with the moving picture or audio information based on said time axis.

17. The information processing method according to claim 13, wherein in said processing step, cut editing is performed on said editing screen with said current time line travelling to indicate a cut-in point and a cut-out point.

18. The information processing method according to claim 13, wherein in said processing step, additional editing for adding predetermined information is performed on said editing screen with said current time line travelling to indicate an addition point.

19. The information processing method according to claim 18, wherein said multiple pieces of information includes still picture information and said predetermined information is still picture information.

20. The information processing method according to claim 18, wherein said multiple pieces of information includes text information and said predetermined information is text information.

21. The information processing method according to claim 7, wherein in said creating step, one template corresponding to said multiple pieces of information is selected from previously registered multiple templates to create said contents corresponding to said one template.

22. The information processing method according to claim 21, wherein said template includes at least a moving picture reproduction portion for displaying a moving picture and a still picture reproduction portion for displaying a still picture.

23. The information processing method according to claim 21, wherein said multiple pieces of information includes at least moving picture or audio information as well as still picture information in synchronized with the moving picture or audio information; and
wherein in said creating step, said one template is selected corresponding to a number of time series of said still picture information.
